# EUROPÄISCHE PATENTSCHRIFT

(11) **EP 0 534 127 B1**
(45) Veröffentlichungstag und Bekanntmachung des Hinweises auf die Patenterteilung: **13.12.1995**
(21) Anmeldenummer: 92114101.6
(22) Anmeldetag: 19.08.1992
(51) Int. Cl.: A01D 78/10, A01B 73/02

(54) **Heuwerbungsmaschine**
Hay making machine
Machine de fenaison

(30) Priorität: 28.08.1991 DE 4128501
(43) Veröffentlichungstag der Anmeldung: 31.03.1993
(73) Patentinhaber: Maschinenfabriken Bernard Krone GmbH, D-48480 Spelle (DE)
(72) Erfinder: Krone, Bernard, W-4441 Spelle (DE); Horstmann, Josef, Dipl.-Ing., W-4530 Ibbenbüren (DE); Leifeling, Karl, Dipl.-Ing., W-4446 Hörstel-Bevergern (DE)

(56) Entgegenhaltungen:
- EP-A- 0 165 638
- EP-A- 0 291 810
- EP-A- 0 385 899
- DE-A- 3 911 296
- DE-U- 9 010 179
- DE-U- 9 100 715
- DE-U- 9 111 676

## Beschreibung

Die Erfindung betrifft eine Heuwerbungsmaschine gemäß dem Oberbegriff des Anspruchs 1.

Es sind Heuwerbungsmaschinen mit sechs und mehr Kreiselrechen bekannt. Bei diesen Maschinen sind immer zwei Kreiselrechen an einem Mittelträger drehbar gelagert und alle weiteren Kreiselrechen sind Seitenträgern zugeordnet, die im Sinne einer guten Bodenanpassung der Arbeitswerkzeuge und der Erreichung einer Transportstellung verschwenkbar sind.

In dem DE-GM 90 10 179.0 ist eine Heuwerbungsmaschine mit acht Kreiselrechen beschrieben. Hier werden die dem Mittelträger benachbarten ersten Seitenträger um etwa vertikale Klappachsen nach hinten verschwenkt und die weiteren Seitenträger können um etwa horizontale Klappachsen nach oben und nach vorne verschwenkt werden.

In gleicher Weise werden die Seitenträger einer Heuwerbungsmaschine nach der DE-OS 39 11 296 verschwenkt. Es wird als Ziel angegeben, in Transportstellung der Heuwerbungsmaschine einen traktornah gelegenen Schwerpunkt zu erreichen. Diese Aufgabe wird aber unzureichend gelöst.

Da die ersten Seitenträger nach hinten verschwenkt werden, befindet sich ein relativ großer Anteil der Maschinenmasse weit hinter dem Zugfahrzeug, wodurch die Dreipunkthydraulik während des Transportes sehr hoch belastet wird. Bei dem vorab genannten Gebrauchsmuster und der genannten Offenlegungsschrift wird deshalb darauf verzichtet, die Maschine beim Transport auszuheben. Sie stützt sich auch hierbei auf Rädern auf dem Erdboden ab.
Bei dem DE-GM 90 10 179.0 ist als weiterer Nachteil anzusehen, daß an jeder Maschinenseite mehrere Druckmittelantriebe vorzusehen sind, um alle Klappbewegungen der Seitenträger ausführen zu können.
Bei einer bekannten Heuwerbungsmaschine, die in der EP-OS 0 385 899 beschrieben ist und der der Oberbegriff von Anspruch 1 entspricht, sind ebenfalls verschwenkbare Seitenträger vorhanden. Vorteilhaft ist hier, daß die Seitenträger so mit Hebeln untereinander verbunden sind, daß nur ein Druckmittelantrieb je Maschinenseite erforderlich ist. Alle Schwenkbewegungen der Seitenträger werden um etwa horizontale Achsen ausgeführt, wodurch zwar eine günstige Lage des Maschinenschwerpunktes in Transportstellung erreicht wird, aber eine große Transportbreite erhalten bleibt. Da hier alle Seitenträger auch in der Transportstellung in einer Ebene verbleiben, ergibt sich zwangsläufig eine große Transportbreite. Um diesem Nachteil entgegenzuwirken, wurde bei der Maschine nach der EP-OS 0 385 899 der zweite Seitenträger extrem kurz gestaltet, wobei aber der zusätzliche Nachteil einer sehr schlechten Bodenanpassungsfähigkeit des an diesem gelagerten Kreiselrechens auftritt. Da hier der Abstand zwischen der Schwenkachse des zweiten Seitenträgers und der Rotationsachse des an ihm gelagerten Kreiselrechens sehr kurz ist, ist ein wesentlich stärkeres Schrägstellen dieses Kreiselrechens beim Durchfahren von Bodenunebenheiten die Folge, als dies bei benachbarten Kreiselrechen der Fall ist.
Bei einer weiterhin bekannten, in der DE-OS 38 27 047 beschriebenen Heuwerbungsmaschine mit acht Rechkreiseln werden Seitenträger ebenfalls um horizontale Schwenkachsen in eine Transportstellung bewegt. Hier befindet sich aber zwischen den zweiten und dritten Seitenträgern kein Gelenk. Die ersten Seitenträger werden zum Transport etwa senkrecht aufgerichtet und die restlichen Teile des Maschinenrahmens mit je zwei Kreiselrechen werden nach innen zur Mitte hin oder über diese hinaus bewegt. Bei dieser Bauvariante ist besonders die sehr große Transporthöhe als Nachteil anzusehen.
Es ist Aufgabe der Erfindung, eine Heuwerbungsmaschine mit zumindest acht Kreiselrechen zu schaffen, die in der Transportstellung in Höhe und Breite wenig Raum beansprucht, einen traktornah gelegenen Schwerpunkt darbietet, so daß die Maschine während des Transportes vom Traktor über die Dreipunkthydraulik getragen werden kann, die an jeder Maschinenseite nur eine Kolben-Zylinderanordnung zur Überführung aus der Arbeits- in die Transportstellung aufweist und die Mängel und Nachteile genannter bekannter Lösungen nicht aufweist.
Zur Lösung dieser Aufgabe zeichnet sich die Heuwerbungsmaschine der eingangs genannten Art durch die im kennzeichnenden Teil des Anspruchs 1 angegebenen Merkmale aus. Hinsichtlich wesentlicher weiterer Ausgestaltungen der Erfindung wird auf die Ansprüche 2 bis 8 verwiesen.

Die Heuwerbungsmaschine weist einen Tragrahmen auf, der mit der Dreipunkt-Hebevorrichtung eines landwirtschaftlichen Zugfahrzeugs zu koppeln ist. Teil des Tragrahmens ist ein nach hinten gerichteter oberer Auslegearm, an dem ein Mittelträger der Heuwerbungsmaschine befestigt ist. Weiterhin besteht zwischen dem Tragrahmen und dem Mittelträger eine Verbindung in Form von zwei gegen Federkraft längenveränderlichen Unterlenkern, wodurch die Heuwerbungsmaschine Fahreigenschaften eines einachsigen Anhängers erhält.

An dem Mittelträger sind zwei Kreiselrechen befestigt. Weiterhin sind im Mittelträger Antriebswellen drehbar gelagert, die über ein Getriebe und eine Gelenkwelle mit der Zapfwelle des Zugfahrzeuges verbunden sind. Die beiden Kreiselrechen werden durch diese Antriebswellen über Kegelräder in bekannter Weise angetrieben und rotieren in Betriebsstellung der Maschine um etwa vertikale Achsen. Beidseitig des Mittelträgers sind an diesem erste Seitenträger befestigt, an denen jeweils ein weiterer Kreiselrechen gelagert ist. Der Mittelträger und die ersten Seitenträger sind durch Gelenke miteinander verbunden. In einer Ausführung weisen der Mittelträger und die ersten Seitenträger an den einander zugewandten Stirnseiten Stirnradverzahnungen auf, die miteinander im Eingriff stehen. Koaxial zu den etwa horizontalen, fahrtrichtungsparallelen Mittelachsen der Stirnradverzahnungen befinden sich außen am Mittelträger und an den Seitenträgern Zapfen. Jeweils ein Zapfen des Mittelträgers und ein Zapfen des jeweiligen ersten Seitenträgers werden von Distanzblechen umschlossen und von diesen in konstantem Abstand zueinander gehalten. So ist der erste Seitenträger relativ zum Mittelträger nach oben klappbar, wobei diese Bewegung gleichzeitig um die Verzahnungsmittelachse des Mittelträgers und um die Verzahnungsmittelachse des unteren Seitenträgers erfolgt.

In den ersten Seitenträgern befinden sich Antriebswellen für die an ihnen gelagerten Kreiselrechen, wobei auch hier das Drehmoment über Kegelräder von den Antriebswellen auf die Kreiselrechen übertragen wird. Innerhalb der Verbindungsstellen zwischen dem Mittelträger und den ersten Seitenträgern sind Doppelkreuzgelenke zwischen je einer Antriebswelle im Mittelträger und der Antriebswelle im ersten Seitenträger so gelagert, daß die Knickpunkte des Doppelkreuzgelenkes auf je einer Verzahnungsmittelachse gelegen sind. Somit wird erreicht, daß die ersten Seitenträger ohne Trennung des Antriebes für die Kreiselrechen um einen Winkel von 90° und mehr nach oben klappbar sind, wobei sich dieser Winkel gleichmäßig auf beide Kreuzgelenke des jeweiligen Doppelkreuzgelenkes verteilt.

Eine Begrenzung des möglichen Klappwinkels ist durch Anschläge realisiert.
Die gelenkige Verbindung zwischen dem Mittelträger und den ersten Seitenträgern ist auch anders, z.B. durch einfache Bolzen-Buchsen-Verbindungen ausführbar. Dabei wären die ersten Seitenträger jeweils um eine Klappachse verschwenkbar. Die Antriebswellen im Mittelträger sind auch bei dieser Bauvariante durch Doppelkreuzgelenke mit den Wellen in den ersten Seitenträgern zu verbinden, wobei die Doppelkreuzgelenke aber verschiebbar auf den Wellen sitzen müssen, was die Drehmomentenübertragung ungünstig beeinflußt.
An den ersten Seitenträgern sind jeweils an den äußeren Enden zweite Seitenträger gelenkig befestigt, die um etwa horizontale, fahrtrichtungsparallele Achsen relativ zu den ersten Seitenträgern klappbar sind. Diese Bewegung wird ebenfalls durch Anschläge nach oben und unten begrenzt.
Es besteht auch hier eine Antriebsverbindung zwischen den in den ersten und zweiten Seitenträgern gelegenen Antriebswellen in Form eines Doppelkreuzgelenkes. Durch die Antriebswellen in den zweiten Seitenträgern werden weitere Kreiselrechen angetrieben, die jeweils außen an den zweiten Seitenträgern drehbar gelagert sind und über Kegelradgetriebe in Rotation um etwa vertikale Achsen versetzt werden. Die Rotationsachsen dieser Kreiselrechen sind gleichzeitig die Klappachsen zwischen dritten Seitenträgern und den zweiten Seitenträgern. Die so gelagerten dritten Seitenträger sind relativ zu den zweiten Seitenträgern um etwa 90° nach hinten klappbar. Auch an den dritten Seitenträgern ist jeweils ein Kreiselrechen gelagert. Zum Antrieb dieser Kreiselrechen sind in den dritten Seitenträgern Antriebswellen vorgesehen, die die Rotationsbewegung von den Kreiselrechen der zweiten Seitenträger übertragen.
Zur Erreichung einer guten Bodenanpassung der Kreiselrechen an den dritten Seitenträgern bestehen diese Seitenträger aus zwei Teilen, wobei die äußeren Teile um jeweils horizontale fahrtrichtungsparallele Schwenkachsen relativ zu den inneren Teilen beweglich sind. Auch diese Beweglichkeit wird durch Anschläge begrenzt. Die horizontalen Schwenkachsen sind nahe den vertikalen Klappachsen der dritten Seitenträger gelegen, so daß die äußeren Teile deutlich länger als die inneren Teile dieser Seitenträger sind. Die Antriebswellen in den dritten Seitenträgern sind im Bereich der horizontalen Schwenkachsen durch Kreuzgelenke verbunden.
Alle acht Kreiselrechen stützen sich auf Laufrädern zum Erdboden ab, welche sich in den Arbeitskreisen der Rechzinken befinden. Alle Laufräder sind in ihrer Winkelstellung zentral einstellbar, so daß es möglich ist, Heuwerbungsarbeiten mit quer oder schräg stehender Maschine durchzuführen. Das Arbeiten mit schräg zur Fahrtrichtung stehender Heuwerbungsmaschine kann z.B. in Feldgrenzbereichen oder am Hang erforderlich sein.
Es ist weiterhin möglich, an den Laufrädern die Neigung der Maschine zu einer vertikalen, quer zur Fahrtrichtung stehenden Ebene zu verändern. Dadurch ist der Wurfwinkel und die Arbeitstiefe den jeweiligen Erfordernissen anzupassen. Dies erfolgt gleichzeitig auch durch die Einstellung der Länge des Oberlenkers der Dreipunkt-Hebevorrichtung.

Alle Kreiselrechen sind in ihrem oberen Bereich von Schutzbügeln umgeben, wodurch ein Unfallschutz gegeben ist. Die Schutzbügel am Mittelträger sind starr an diesem befestigt. Alle anderen Schutzbügel vollziehen Schwenkbewegungen beim Klappen der jeweiligen Seitenträger aus der Betriebsstellung in die Transportstellung und umgekehrt.

Die Klappbewegung aller drei Seitenträger jeder Maschinenseite wird durch je eine Kolben-Zylinderanordnung erreicht. Diese Kolben-Zylinderanordnungen sind jeweils einerseits außen am Mittelträger vertikal verschwenkbar befestigt und andererseits mit einem zweiten Seitenträger gelenkig verbunden. Sie sind mit der Hydraulikanlage des Zugfahrzeugs verbunden und über Ventile ansteuerbar.
Bei Verkürzung der Länge einer Kolben-Zylinderanordnung wird zuerst der zweite Seitenträger relativ zu dem ersten Seitenträger bis zum Erreichen einer Anschlagposition nach oben geklappt. Dann klappen der erste und der zweite Seitenträger relativ zum Mittelträger nach oben, wobei diese Bewegung um die weiter oben beschriebenen Verzahnungsmittelachsen oder Klappachsen erfolgt. Ist die minimale Länge der Kolben-Zylinderanordnung erreicht, befindet sich der erste Seitenträger in einer etwa senkrechten Position und der zweite Seitenträger ist schräg nach innen in Richtung der Maschinenmitte geneigt.
Die dritten Seitenträger sind über jeweils eine Steuerstange mit dem Mittelträger verbunden. Diese Steuerstangen sind in Fahrtrichtung gesehen vor dem Maschinenrahmen gelenkig an Stützen des Mittelträgers bzw. an Laschen der dritten Seitenträger befestigt. Bei Verkürzung der Länge der Kolben-Zylinderanordnung, aber konstanter Länge der Steuerstange werden die dritten Seitenträger zwangsläufig nach hinten geklappt. Dies erfolgt gleichzeitig mit dem Klappen der zweiten bzw. der ersten Seitenträger um die weiter oben beschriebenen Klappachsen. Somit sind die dritten Seitenträger in Transportstellung der Maschine von den Enden der schräg nach innen geneigten zweiten Seitenträger aus etwa fahrtrichtungsparallel nach hinten gerichtet. In dieser Transportstellung befindet sich nur ein geringer Anteil der Maschinenmasse in größerer Entfernung zum Zugfahrzeug, als dies in der Betriebsstellung der Fall ist. Trotz sehr großer Arbeitsbreite der Heuwerbungsmaschine ist eine Transportstellung erreichbar, in der nur wenig Platz in Höhe und Breite benötigt wird. Weiterhin vorteilhaft ist, daß zur Überführung der Maschine aus der Betriebsstellung in die Transportstellung nur zwei Kolben-Zylinderanordnungen erforderlich sind.

Weitere Einzelheiten und Vorteile ergeben sich aus nachfolgender Beschreibung eines Ausführungsbeispiels einer Heuwerbungsmaschine nach der Erfindung. In den dazugehörigen Zeichnungen stellen im einzelnen dar:
- Fig. 1: eine Draufsicht auf die erfindungsgemäße Heuwerbungsmaschine in Betriebsstellung;
- Fig. 2: eine Rückansicht der Heuwerbungsmaschine bei Darstellung der linken Maschinenseite in Transportstellung und der rechten Maschinenseite in Betriebsstellung;

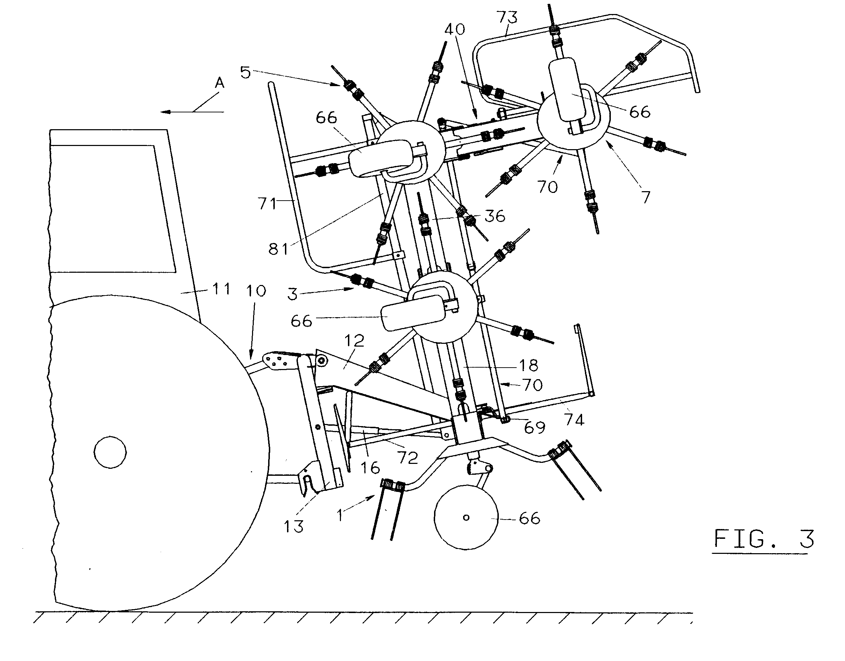

- Fig. 3: eine Seitenansicht von links nach Fig. 2 bei ausgehobener Heuwerbungsmaschine;
- Fig. 4: Detail X aus Fig. 2 in schematischer Darstellungsweise und bei Weglassung des Stellgestänges und der Schutze;
- Fig. 5: eine Draufsicht nach Fig. 4;
- Fig. 6: Detail Z aus Fig. 2 in schematischer, teilweise geschnittener Darstellungsweise.

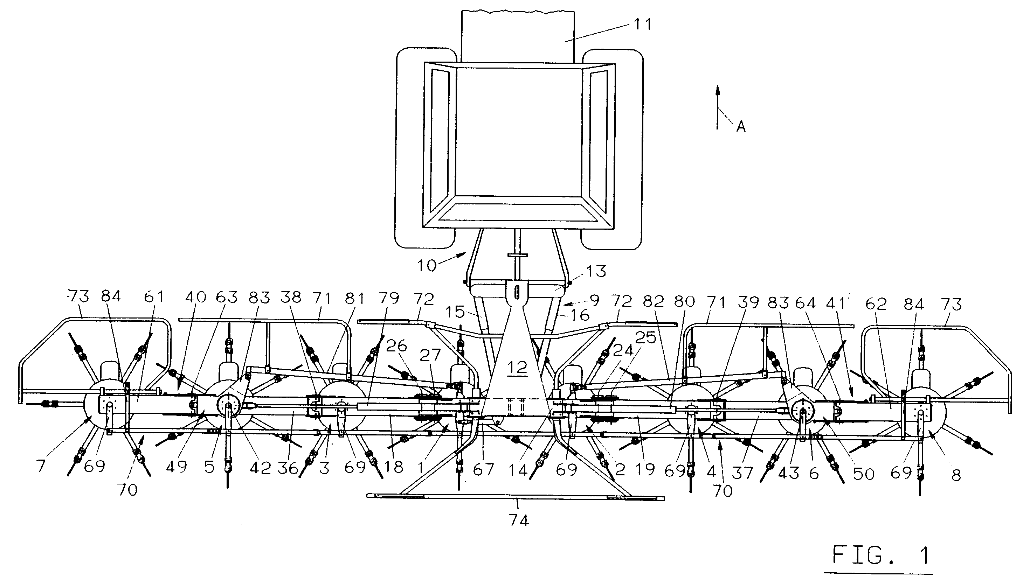

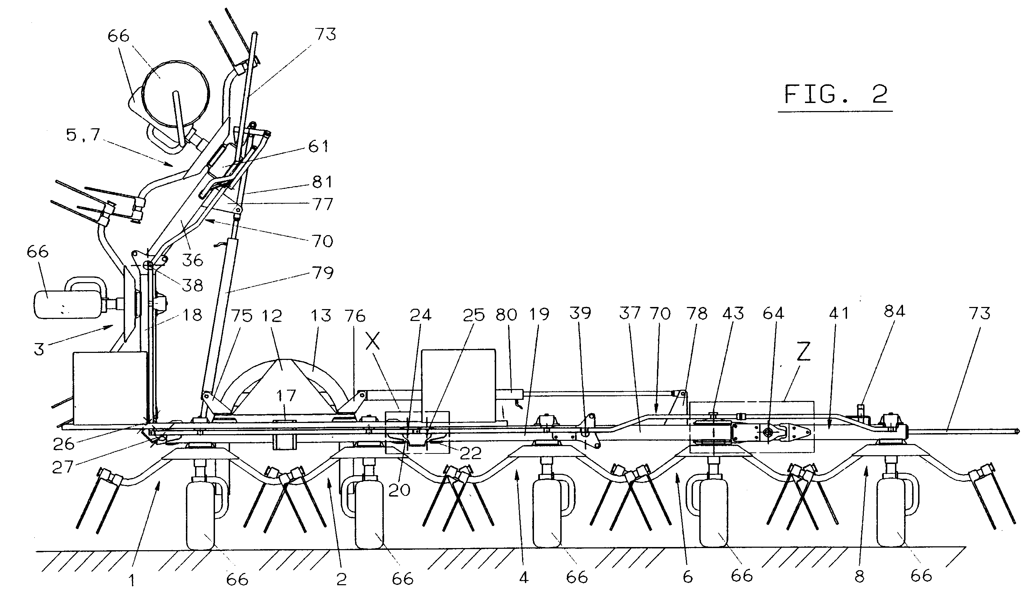

In Fig. 1 ist eine erfindungsgemäße Heuwerbungsmaschine mit acht Kreiselrechen 1 bis 8 verdeutlicht, die über einen Tragrahmen 9 mit der Dreipunkt-Hebevorrichtung 10 eines landwirtschaftlichen Zugfahrzeugs 11 gekoppelt ist. Der Tragrahmen 9 weist einen oberen Auslegearm 12 auf, der begrenzt verschwenkbar an einem Dreipunktbock 13 des Tragrahmens 9 befestigt ist. An der hinteren unteren Seite des Auslegearms 12 ist ein Mittelträger 14 der Heuwerbungsmaschine verschraubt. Weiterhin ist der Mittelträger 14 durch zwei gegen Federkraft längenveränderliche Unterlenker 15, 16 mit dem Tragrahmen 9, speziell dem Dreipunktbock 13, verbunden. Durch die Gestaltung des Tragrahmens 9 weist die Heuwerbungsmaschine in Betriebsstellung Fahreigenschaften eines einachsigen gezogenen Anhängers auf, da sie um eine etwa vertikale Achse relativ zum Zugfahrzeug 11 verschwenkbar ist. Die Neigung der Heuwerbungsmaschine zu einer vertikalen, quer zur Fahrtrichtung A gelegenen Ebene ist über den Oberlenker der Dreipunkt-Hebevorrichtung 10 einstellbar. Der Mittelträger 14 besteht aus einem kastenförmigen Hohlprofil und erstreckt sich von einem mittig verschraubten, in Fig. 2 angedeuteten Verteilergetriebe 17 beidseitig quer zur Fahrtrichtung A nach außen. Das Verteilergetriebe 17 ist über eine nicht in den Zeichnungen verdeutlichte Gelenkwelle mit der Zapfwelle des Zugfahrzeugs 11 zu verbinden und weist Abtriebswellen auf, die beidseitig zentral im Mittelträger 14 liegen.

Am Mittelträger 14 ist beidseitig jeweils ein Kreiselrechen 1, 2 bekannter Bauweise drehbar gelagert. Diese Kreiselrechen 1, 2 werden über Kegelradgetriebe und mit dem Verteilergetriebe 17 verbundene im Mittelträger 14 gelegene Wellen angetrieben.

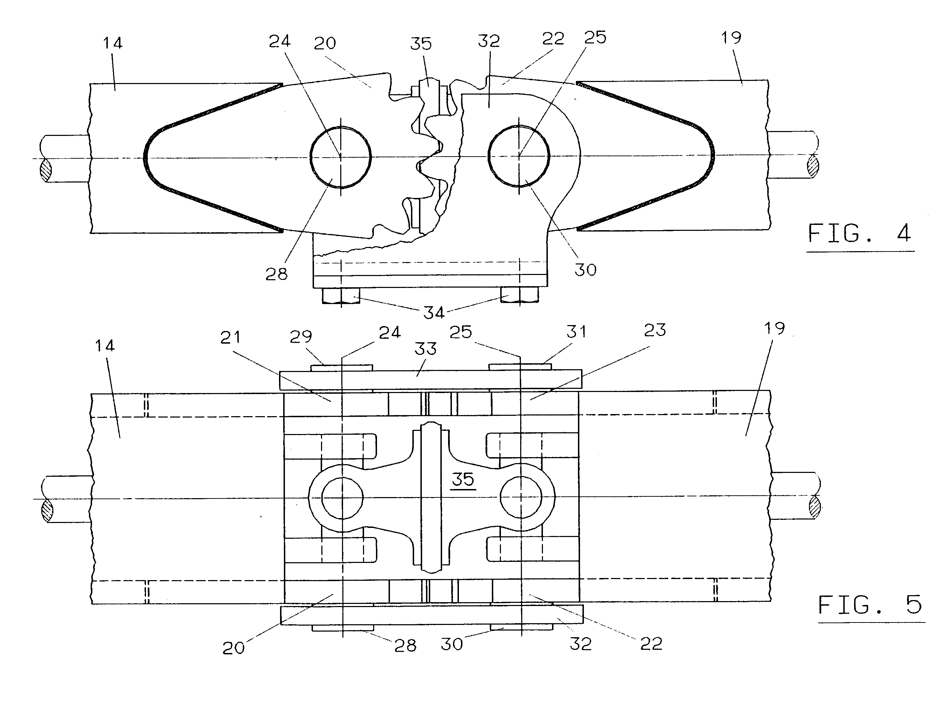

Beiderseits des Mittelträgers 14 sind erste Seitenträger 18, 19, an denen jeweils ein Kreiselrechen 3, 4 gelagert ist, gelenkig befestigt. Die Seitenträger 18, 19 bestehen ebenfalls aus kastenförmigem Hohlprofil und erstrecken sich fluchtend zum Mittelträger 14 quer zur Fahrtrichtung A. Wie in den Fig. 4, 5 verdeutlicht, weisen der Mittelträger 14 und die ersten Seitenträger 18, 19 Verzahnungssegmente 20, 21, 22, 23 mit Stirnradverzahnung auf, die an den einander zugewandten Außenseiten in Fahrtrichtung A gesehen vorne und hinten am kastenförmigen Hohlprofil angebracht sind. Die Verzahnungsmittelachsen 24, 25, 26, 27 haben eine fahrtrichtungsparallele Ausrichtung.

Koaxial zu den Verzahnungsmittelachsen 24, 25, 26, 27 sind vorne und hinten am Mittelträger 14 und an den ersten Seitenträgern 18, 19 Zapfen 28, 29, 30, 31 angebracht, wobei jeweils ein Zapfen 28, 29 des Mittelträgers 14 und ein Zapfen 30, 31 der ersten Seitenträger 18, 19 paarweise von Distanzblechen 32, 33 in konstantem Abstand zueinander gehalten wird, der dem Wälzkreisdurchmesser der Verzahnungssegmente 20, 21, 22, 23 entspricht. Die Distanzbleche 32, 33 sind unter den Verzahnungssegmenten 20, 21, 22, 23 durch Schrauben 34 miteinander verbunden.

Bei einer so gestalteten gelenkigen Verbindung der ersten Seitenträger 18, 19 mit dem Mittelträger 14 sind die ersten Seitenträger 18, 19 um die Verzahnungsmittelachsen 24, 25, 26, 27 relativ zum Mittelträger 14 klappbar. Diese Bewegung ist nach oben bei etwa 90° und nach unten bei etwa 15° durch nicht in den Zeichnungen verdeutlichte Anschläge begrenzt.
In beiden gelenkigen Verbindungen zwischen dem Mittelträger 14 und den ersten Seitenträgern 18, 19 sind Doppelkreuzgelenke 35 angeordnet, deren Knickpunkte auf den Verzahnungsmittelachsen 24, 25 bzw. 26, 27 gelegen sind. Es besteht eine Antriebsverbindung zwischen dem Kegelrad zum Antrieb der Kreiselrechen 1, 2 des Mittelträgers 14 und den Doppelkreuzgelenken 35. Beim Klappen der Seitenträger 18, 19 relativ zum Mittelträger 14 verteilt sich der Winkel gleichmäßig auf beide Knickpunkte der Doppelkreuzgelenke 35, was auch bei einem Klappwinkel von 90° einen gleichmäßigen Lauf der Abtriebsseiten der Doppelkreuzgelenke 35 zur Folge hat.

Von den Abtriebsseiten der Doppelkreuzgelenke 35 führen in den ersten Seitenträgern 18, 19 Wellen mit endseitiger Kegelradverzahnung zu Kegelrädern von weiteren Kreiselrechen 3, 4, die an den ersten Seitenträgern 18, 19 gelagert sind.

Außen an den ersten Seitenträgern 18, 19 sind etwa fluchtend zu diesen zweite Seitenträger 36, 37 gelenkig befestigt. Die Verbindung besteht in Form von fahrtrichtungsparallelen Klappachsen 38, 39, wobei die Enden der ersten und zweiten Seitenträger 18, 19, 36, 37 durch koaxial zu den Klappachsen 38, 39 gelegene Bolzen-Buchsen-Verbindungen zusammengehalten werden. Es ist eine Klappbewegung der zweiten Seitenträger 36, 37 relativ zu den ersten Seitenträgern 18, 19 um die Klappachsen 38, 39 möglich, die nach oben bei etwa 40° und nach unten bei etwa 15° durch Anschläge begrenzt wird.

An den zweiten Seitenträgern 36, 37 sind an den äußeren Enden Kreiselrechen 5, 6 gelagert. Es besteht eine in den Seitenträgern 18, 36, 19, 37 gelegene Antriebsverbindung zwischen den Kreiselrechen 3, 5 und 4, 6. Im Bereich der Gelenkverbindung zwischen den Seitenträgern 18, 36, 19, 37 ist diese Antriebsverbindung durch Doppelkreuzgelenke realisiert, durch die Wellen in den Seitenträgern 18, 36, 19, 37 verbunden sind.

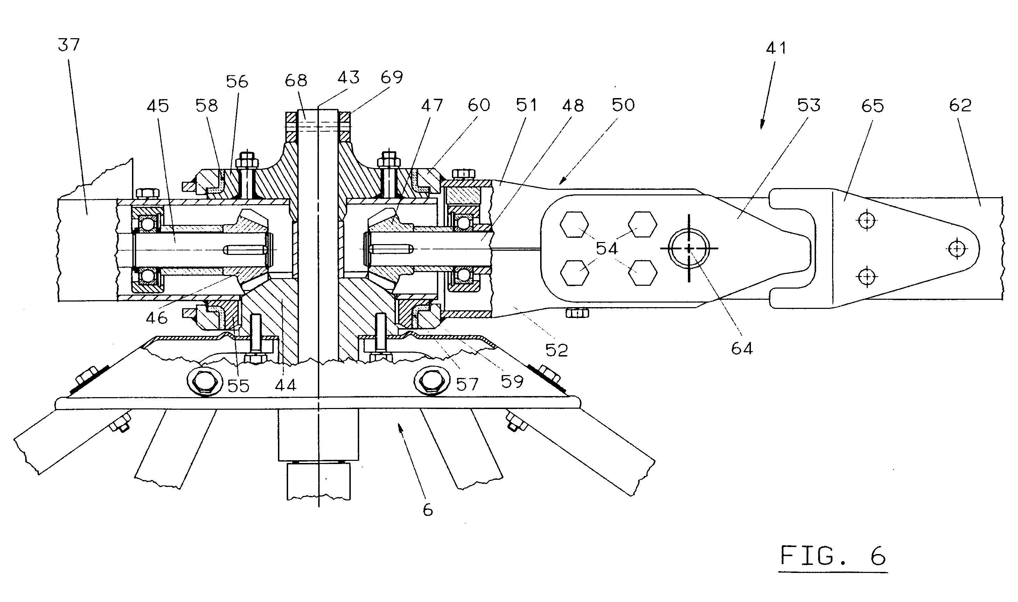

Außen an den zweiten Seitenträgern 36, 37 sind dritte Seitenträger 40, 41 etwa fluchtend zu den zweiten Seitenträgern 36, 37 gelenkig befestigt. Diese bestehen wie alle anderen Seitenträger 18, 19, 36, 37 aus kastenförmigem Hohlprofil. Die dritten Seitenträger 40, 41, an deren äußeren Enden die Kreiselrechen 7, 8 gelagert sind, sind um etwa vertikale Klappachsen 42, 43 um 90° nach hinten klappbar. Diese vertikalen Klappachsen 42, 43 verlaufen koaxial zu den Rotationsachsen der Kreiselrechen 5, 6 bzw. auch zu den Symmetrieachsen der Kegelräder 44 zum Antrieb der Kreiselrechen 5, 6. Im Detail ist diese Gelenkverbindung durch Fig. 6 verdeutlicht.

Es bestehen Antriebsverbindungen in den zweiten Seitenträgern 36, 37 in Form von Wellen 45 mit Kegelrädern 46, welche mit den Kegelrädern 44 im Eingriff stehen, wobei das Drehmoment, wie weiter oben beschrieben, von den Kreiselrechen 3, 4 auf die Kreiselrechen 5, 6 übertragen wird.

Mit dem Kegelrad 44 steht ein weiteres Kegelrad 47 im Eingriff, das auf einer Welle 48 sitzt. Die Welle 48 ist in inneren Teilen 49, 50 der dritten Seitenträger 40, 41 gelagert. Diese inneren Teile 49, 50 bestehen aus einem Oberteil 51 und einem Unterteil 52, die durch Anschlagplatten 53 und Schrauben 54 miteinander verbunden sind.

An den zweiten Seitenträgern 36, 37 sind Lagersitze 55, 56 unten verschweißt bzw. oben verschraubt. Auf die Lagersitze 55, 56 sind Buchsen 57, 58 aufgesetzt, die als Führung für Lagerringe 59, 60 dienen, die mit den Oberteilen 51 bzw. den Unterteilen 52 verschweißt sind. Somit sind die dritten Seitenträger 40, 41 relativ zu den zweiten Seitenträgern 36, 37 um die Klappachsen 42, 43 klappbar, wobei die Lagersitze 55, 56, die Lagerringe 59, 60, die Kegelräder 44 und die Rotationsachsen der Kreiselrechen 5, 6 koaxial zu den Klappachsen 42, 43 gelegen sind. Bei dieser Klappbewegung bleibt die Antriebsverbindung zwischen den Kegelrädern 46, 44, 47 erhalten, obwohl das Kegelrad 47 und die Welle 48 mit dem jeweiligen dritten Seitenträger 40, 41 nach hinten geklappt wird.
Die inneren Teile 49, 50 der dritten Seitenträger 40, 41 sind gelenkig mit äußeren Teilen 61, 62 verbunden, die auch aus kastenförmigem Hohlprofil gefertigt sind. Es bestehen hier Bolzen-Buchsen-Verbindungen koaxial zu den fahrtrichtungsparallelen Schwenkachsen 63, 64. Somit können die äußeren Teile 61, 62 mit den an ihnen gelagerten Kreiselrechen 7, 8 zur Erreichung einer guten Bodenanpassung dieser Kreiselrechen um die Schwenkachsen 63, 64 relativ zu den inneren Teilen 49, 50 verschwenkt werden. Diese Schwenkbewegung wird durch die Zusammenwirkung der Anschlagplatte 53 mit einer Gegenplatte 65 begrenzt. In den dritten Seitenträgern 40, 41 befinden sich nicht in den Zeichnungen verdeutlichte Kreuzgelenke, deren Knickpunkte auf den Schwenkachsen 63, 64 liegen. Sie verbinden die Wellen 48 in den inneren Teilen 49, 50 mit Wellen in den äußeren Teilen 61, 62, durch die der Antrieb der Kreiselrechen 7, 8 über weitere Kegelradgetriebe erfolgt.

Alle Kreiselrechen 1 bis 8 stützen sich auf Laufrädern 66 zum Erdboden ab. Diese befinden sich innerhalb der Umlaufbahnen der Zinken der Kreiselrechen 1 bis 8 und sind über eine Kolben-Zylinderanordnung 67 in ihrer Laufrichtung einstellbar. Dazu sind koaxial zu den Rotationsachsen der Kreiselrechen 1 bis 8 Radhalteachsen 68 nach oben durch den Mittelträger 14 bzw. die Seitenträger 18, 19, 36, 37, 40, 41 geführt, auf denen Stellhebel 69 befestigt sind. Die Stellhebel 69 sind durch ein Stellgestänge 70 miteinander verbunden. Über das gelenkig ausgeführte Stellgestänge 70 ist durch die Kraft der Kolben-Zylinderanordnung 67 die Stellung der Stellhebel 69 und damit der Laufräder 66 veränderbar.

Weiterhin sind Schutzvorrichtungen 71, 72, 73, 74 vorgesehen, durch die die Kreiselrechen 1 bis 8 nach vorne und die Kreiselrechen 1, 2 nach hinten zur Unfallvermeidung umhüllt werden.

Zwischen Haltelaschen 75, 76, die beidseitig am Mittelträger 14 verschweißt sind, und Haltelaschen 77, 78 an der Oberseite der zweiten Seitenträger 36, 37 sind Kolben-Zylinderanordnungen 79, 80 gelenkig befestigt. Weiterhin sind Steuerstangen 81, 82 zwischen dem Mittelträger 14 und den inneren Teilen 49, 50 der dritten Seitenträger 40, 41 vorgesehen. Sie sind durch Kugelkopfgelenke an der Vorderseite der Mittelträger 14 befestigt und andererseits zwischen Laschen 83 des Oberteils 51 und des Unterteils 52 der inneren Teile 49, 50 angebracht.

Bei sich in Betriebsstellung befindlicher Heuwerbungsmaschine gemäß Fig. 1 wird nach Ventilbetätigung der Hydraulikanlage des Zugfahrzeuges 11 und Druckmittelzufuhr die Länge der Kolben-Zylinderanordnungen 79, 80 verkürzt. Das hat ein Hochschwenken der zweiten und ersten Seitenträger 36, 37, 18, 19 zur Folge, wobei die dritten Seitenträger 40, 41 gleichzeitig durch die Steuerstangen 81, 82 nach hinten gedrückt werden. Diese Bewegungen um die Verzahnungsmittelachsen 24, 25, 26, 27 bzw. um die Klappachsen 38, 39, 42, 43 können bei getrennter Ventilansteuerung der Kolben-Zylinderanordnungen 79, 80 bei beiden Maschinenseiten gleichzeitig oder getrennt voneinander vorgenommen werden. In der somit erreichbaren Transportstellung stehen die ersten Seitenträger 18, 19 etwa senkrecht zum Mittelträger 14 nach oben, die zweiten Seitenträger 36, 37 befinden sich über dem Mittelträger 14 nach innen zur Maschinenmitte hin geneigt und die dritten Seitenträger 40, 41 weisen etwa horizontal von den Enden der zweiten Seitenträger 36, 37 um ca. 90° geklappt nach hinten. Somit befindet sich nur ein geringer Anteil der Maschinenmasse in der Transportstellung in den Schwerpunkt nach hinten verlagernden Abstand zum Zugfahrzeug, wobei die Transportbreite und -höhe gering sind.

Die Schutzvorrichtungen 72, 74 sind starr am Mittelträger 14 verschraubt. Die Schutzvorrichtungen 71 sind jeweils mit den Steuerstangen 81, 82 verschraubt und vollziehen deren Bewegungen mit. Die Schutzvorrichtungen 73 sind jeweils gelenkig an den dritten Seitenträgern 40, 41 befestigt. Durch Stellhebel 84 zwischen den Schutzvorrichtungen 73 und dem Stellgestänge 70 werden sie in Betriebsstellung in einer horizontalen Ebene gehalten und in Transportstellung in Richtung der Zinken der äußeren Kreiselrechen 7, 8 verschwenkt, was aus Fig. 2 deutlich wird. Das Stellgestänge 70 für die Festlegung der Laufrichtung der Laufräder 66 ist in sieben Segmente unterteilt, die gelenkig miteinander verbunden sind und die Bewegung der Seitenträger 18, 19, 36, 37, 40, 41 in vergleichbarer Weise mitvollziehen.

Zwischen dem Mittelträger 14 und den ersten Seitenträgern 18, 19 befinden sich nicht in den Zeichnungen verdeutlichte Fallen, die ein unbeabsichtigtes Klappen aus der Transportstellung in die Betriebsstellung verhindern.

Vor Erreichen der Rastposition der Fallen in der Transportstellung werden durch die Kraft der Kolben-Zylinderanordnungen 79, 80 Druckfedern gespannt, die in baulicher Einheit mit den Fallen zwischen dem Mittelträger 14 und den ersten Seitenträgern 18, 19 angeordnet sind. Das Herabschwenken der Seitenträger 18, 19, 36, 37, 40, 41 aus der Transportstellung in die Betriebsstellung erfolgt nach Lösen der Fallen zuerst durch die Kraft der Druckfedern und dann durch Gewichtskraft. Somit sind die Kolben-Zylinderanordnungen 79, 80 einfachwirkend ausgeführt.

Die Heuwerbungsmaschine mit einer großen Arbeitsbreite ist bei einer derartigen erfindungsgemäßen Gestaltung bei Verwendung von nur einer einfachwirkenden Kolben-Zylinderanordnung 79, 80 je Maschinenseite in eine Transportstellung bringbar, in der nur geringe Ausmaße in Höhe und Breite vorliegen und der Maschinenschwerpunkt nahe dem Zugfahrzeug gelegen ist.

## Patentansprüche

1. Heuwerbungsmaschine mit einem zumindest acht um Hochachsen drehbare Kreiselrechen (1 bis 8) abstützenden Querträger, der einen an einen landwirtschaftlichen Traktor oder dergleichen Zugfahrzeug (11) anhäng- oder anbaubaren Mittelträger (14) mit zwei mittleren Kreiselrechen (1, 2) und an diesen angelenkte, untereinander gelenkig verbundene Seitenträger (18, 19, 36, 37, 40, 41) für weitere Kreiselrechen (3 bis 8) umfaßt, wobei jedem Seitenträger (18, 19, 36, 37, 40, 41) ein Kreiselrechen (3 bis 8) zugeordnet ist und die Seitenträger (18, 19, 36, 37, 40, 41) aus ihrer Betriebsstellung in eine die Maschinenbreite verringernde Transportstellung klappbar sind, wobei zur Überführung der Seitenträger (18, 19, 36, 37, 40, 41) aus der Betriebsstellung in die Transportstellung die dem Mittelträger (14) benachbarten ersten Seitenträger (18, 19) und die diesen benachbarten zweiten Seitenträgern (36, 37) jeweils um etwa horizontale, fahrtrichtungsparallele Achsen aufwärts Klappbar sind, dadurch gekennzeichnet, daß die den zweiten Seitenträgern (36, 37) benachbarten dritten Seitenträgern (40, 41) jeweils um etwa vertikale Klappachsen (42, 43) nach hinten klappbar sind.

2. Heuwerbungsmaschine nach Anspruch 1, dadurch gekennzeichnet, daß die einander zugewandten Stirnseiten des Mittelträgers (14) und der ersten Seitenträger (18, 19) durch miteinander im Eingriff stehende Verzahnungssegmente (20 bis 23) und Distanzbleche (32, 33) in Verbindung gebracht sind und daß die Klappbewegung der ersten Seitenträger (18, 19) relativ zum Mittelträger (14) um etwa horizontale, fahrtrichtungsparallele Verzahnungsmittelachsen (24 bis 27) der Verzahnungssegmente (20 bis 23) erfolgt.

3. Heuwerbungsmaschine nach den Ansprüchen 1 oder 2, dadurch gekennzeichnet, daß die etwa vertikalen Klappachsen (42, 43) um die die dritten Seitenträger (40, 41) nach hinten klappbar sind, identisch sind mit den Drehachsen der Kreiselrechen (5, 6) an den zweiten Seitenträgern (36, 37).

4. Heuwerbungsmaschine nach einem der Ansprüche 1 bis 3, dadurch gekennzeichnet, daß die äußeren dritten Seitenträger (40, 41) durch je ein Gelenk mit einer nahezu horizontalen, fahrtrichtungsparallelen Schwenkachse (63, 64) in je zwei Teile (49, 61, 50, 62) geteilt werden, wobei die Gelenke nahe den Klappachsen (42, 43) zwischen den zweiten und dritten Seitenträgern (36, 37, 40, 41) angeordnet sind.

5. Heuwerbungsmaschine nach einem der Ansprüche 1 bis 4, dadurch gekennzeichnet, daß zentral im Mittelträger (14) und in den Seitenträgern (18, 19, 36, 37, 40, 41) gelegene Antriebswellen (45, 48) für die Kreiselrechen (1 bis 8) zwischen dem Mittelträger (14) und den ersten Seitenträgern (18, 19) sowie zwischen den ersten und den zweiten Seitenträgern (18, 19, 36, 37) durch Doppelkreuzgelenke (35) und zwischen den beiden zueinander gelenkigen Teilen (49, 61, 50, 62) der dritten Seitenträger (40, 41) durch Kreuzgelenke verbunden sind.

6. Heuwerbungsmaschine nach einem der Ansprüche 1 bis 5, dadurch gekennzeichnet, daß über ein koaxial zur vertikalen Klappachse (42, 43) der dritten Seitenträger (40, 41) gelegenes Kegelrad (44), welches mit jeweils einem Ritzel (46, 47) auf den Antriebswellen (45, 48) im zweiten Seitenträger (36, 37) und im dritten Seitenträger (40, 41) im Eingriff steht, der Antrieb der äußeren Kreiselrechen (7, 8) erfolgt und diese Antriebsverbindung in jeder Maschinenposition erhalten bleibt.

7. Heuwerbungsmaschine nach einem der Ansprüche 1 bis 6, dadurch gekennzeichnet, daß das Verschwenken aller drei Seitenträger (18, 36, 40, 19, 37, 41) jeder Maschinenseite um die jeweiligen Achsen, vorzugsweise die Verzahnungsmittelachsen (24, 25, 26, 27) bzw. die Klappachsen (38, 39, 42, 43) durch die Kraft jeweils einer zwischen Haltelaschen (75, 76, 77, 78) des Mittelträgers (14) und des jeweils zweiten Seitenträgers (36, 37) gelenkig befestigten Kolben-Zylinderanordnung (79, 80) erfolgt.

8. Heuwerbungsmaschine nach einem der Ansprüche 1 bis 7, dadurch gekennzeichnet, daß Laschen (83) der dritten Seitenträger (40, 41) so durch Steuerstangen (81, 82) mit dem Mittelträger (14) verbunden sind, daß das gleichzeitige Verschwenken der Seitenträger (40, 41) mit den Seitenträgern (18, 19, 36, 37) erfolgt.

## Claims

1. A haymaking machine with a cross-member supporting at least eight rotary rakes (1 to 8) which are rotatable about vertical axes and which comprises a middle bearer which can be attached to or built onto an agricultural tractor or the like tractor vehicle (11) and which has two central rotary rakes (1, 2) and, articulated on these latter and articulatingly connected to one another, lateral members (18, 19, 36, 37, 40, 41) for further rotary rakes (3 to 8), whereby one rotary rake (3 to 8) is associated with each lateral member (18, 19, 36, 37, 40, 41), the lateral members (18, 19, 36, 37, 40, 41) being adapted to be swung out of their operating position into a transit position which reduces the width of the machine, whereby in order to move the lateral members (18, 19, 36, 37, 40, 41) out of the operating position and into the transit position the first lateral members adjacent the central member (14) and the two lateral members (36, 37) adjacent the first lateral members (18, 19) are adapted to be swung in each case upwardly about horizontal axes which are parallel with the direction of travel, characterised in that the third lateral members (40, 41) adjacent the second lateral members (36, 37) are adapted to be swung rearwardly in each case about substantially vertical axes (42, 43).

2. A haymaking machine according to claim 1, characterised in that the mutually facing end faces of the central bearing (14) and of the first lateral members (18, 19) are brought into a connecting relationship by mutually toothed segments (20 to 23) and spacer plates (32, 33) and in that the pivoting movement of the first lateral members (18, 19) in relation to the central member (14) takes place about substantially horizontal central tooth axes (24 to 27) of the toothed segments (20 to 23) which are parallel with the direction of travel.

3. A haymaking machine according to claims 1 or 2, characterised in that the substantially vertical axes (42, 43) about which the third lateral members (40, 41) can be pivoted rearwardly are identical to the pivot axes of the rotary rakes (5, 6) on the two lateral members (36, 37).

4. A haymaking machine according to one of claims 1 to 3, characterised in that the outer third lateral members (40, 41) are divided by in each case one joint with a virtually horizontal pivot axis (63, 64) parallel with the direction of travel and into in each case two parts (49, 61, 50, 62), the joints being disposed close to the axes (42, 43) between the second and third lateral members (36, 37, 40, 41).

5. A haymaking machine according to one of claims 1 to 4, characterised in that centrally in the central member (14) and in the lateral members (18, 19, 36, 37, 40, 41) there are drive shafts (45, 48) for the rotary rakes (1 to 8) situated between the central member (14) and the first lateral members (18, 19) and between the first and second lateral members (18, 19, 36, 37) which are connected by double universal joints (35) and between the two mutually articulating parts (49, 61, 50, 62) of the third lateral members (40, 41) which are connected by universal joints.

6. A haymaking machine according to one of claims 1 to 5, characterised in that via a bevel wheel (44) situated coaxially with the vertical hinging axis (42, 43) of the third lateral members (40, 41) and which meshes with in each case a pinion (46, 47) on the drive shafts (45, 48) in the second lateral member (36, 37) and in the third lateral member (40, 41), the drive for the outer rotary rakes (7, 8) takes place, this driving connection remaining in any position of the machine.

7. A haymaking machine according to one of claims 1 to 6, characterised in that the pivoting of all three lateral members (18, 36, 40, 19, 37, 41) on each side of the machine about the respective axes, preferably the central axes (24, 25, 26, 27) of the teeth or the hinging axes (38, 39, 42, 43) takes place by virtue of the force of in each case a piston-cylinder arrangement (79, 80) articulatingly fixed between retaining lugs (75, 76, 77, 78) of the central member (14) and of the respective second lateral member (36, 37).

8. A haymaking machine according to one of claims 1 to 7, characterised in that lugs (83) on the third lateral members (40, 41) are so connected to the central member (14) by control rods (82, 81) that pivoting of the lateral members (40, 41) takes place at the same time as that of the lateral members (18, 19, 36, 37).

## Revendications

1. Machine de fenaison comprenant une poutre transversale supportant au moins huit râteaux rotatifs (1-8) tournant autour d'axes dirigés vers le haut cette poutre comportant une poutre centrale (14) susceptible d'être montée ou accrochée à un tracteur agricole ou véhicule tracteur analogue (11) et pourvus de deux râteaux rotatifs médians (1, 2), des poutres latérales (18, 19, 36, 37, 40, 41) reliées de manière articulée entre elles et à la poutre centrale, pour d'autres râteaux rotatifs (3-8), chaque poutre latérale (18, 19, 36, 37, 40, 41) étant pourvu d'un râteau rotatif (3-8) ces poutres latérales (18, 19, 36, 37, 40, 41) pouvant être basculés de leur position de fonctionnement à une position de transport réduisant la largeur de la machine, et pour faire passer les poutres latérales (18, 19, 36, 37, 40, 41) de leur position de fonctionnement à leur position de transport, les premières poutres latérales (18, 19) voisines de la poutre médiane (14) et les secondes poutres latérales (36, 37) voisines des premières, se rélèvent par basculement autour d'axes sensiblement horizontaux, parallèles à la direction de déplacement, caractérisée en ce que les troisièmes poutres latérales (40, 41) adjacentes des secondes poutres latérales (36, 37) se basculent vers l'arrière chaque fois autour d'axes de basculement (42, 43) respectifs sensiblement verticaux.

2. Machine selon la revendication 1, caractérisée en ce que les faces frontales en regard de la poutre centrale (14) et des premières poutres latérales (18, 19) coopèrent par des segments dentés (20-23) en prise et des tôles d'écartement (32, 33) tandis que le mouvement de basculement des premières poutres latérales (18, 19) par rapport à la poutre centrale (14) se fait autour des axes médians (24-27) des segments dentés (20-23), ces axes étant parallèles à la direction de déplacement et sensiblement horizontaux.

3. Machine selon l'une des revendications 1 ou 2, caractérisée en ce que les axes de basculement (42, 43) sensiblement verticaux autour desquels les troisièmes poutres latérales (40, 41) se basculent vers l'arrière sont identiques aux axes de rotation des râteaux rotatifs (5, 6) des secondes poutres latérales (36, 37).

4. Machine selon l'une des revendications 1 à 3, caractérisée en ce que les troisièmes poutres latérales (40, 41) extérieures sont chaque fois divisées en deux parties (49, 61, 50, 62) par une articulation d'axe de pivotement (63, 64) parallèle à la direction de déplacement, sensiblement horizontal, et les articulations proches des axes de basculement (42, 43) sont prévues entre les troisièmes et quatrièmes poutres latérales (36, 37, 40, 41).

5. Machine selon l'une des revendications 1 à 4, caractérisée en ce que les arbres d'entraînement (45, 48) des râteaux rotatifs (1-8) disposés de manière centrale dans la poutre médiane (14) et dans les poutres latérales (18, 19, 36, 37, 40, 41) sont reliés entre la poutre centrale (14) et les premières poutres latérales (18, 19) ainsi qu'entre les premières et secondes poutres latérales (18, 19, 36, 37) par des articulations à double cardan (35) et entre les deux parties articulées (49, 61, 50, 62) des troisièmes poutres latérales (40, 41) par des cardans.

6. Machine selon l'une des revendications 1 à 5, caractérisée en ce qu'une roue conique (44) coaxiale à l'axe de basculement vertical (42, 43) des troisièmes poutres latérales (40, 41), qui engrène avec un pignon (46, 47) des axes d'entraînement (45, 48) de la seconde poutre latérale (36, 37) et avec la troisième poutre latérale (40, 41), assurent l'entraînement des râteaux rotatifs (7, 8) extérieurs et cette liaison d'entraînement reste conservée quelle que soit la position de la machine.

7. Machine selon l'une des revendications 1 à 6, caractérisée en ce que le basculement des trois poutres latérales (18, 36, 40, 19, 37, 41) de chaque côté de la machine autour des axes respectifs de préférence les axes médians des dentures (24, 25, 26, 27) ou les axes de basculement (38, 39, 42, 43) se fait par la force développée par un vérin (79, 80) monté de manière articulée chaque fois entre les pattes de fixation (75, 76, 77, 78) de la poutre médiane (14) et de chaque seconde poutre latérale (36, 37).

8. Machine selon l'une des revendications 1 à 7, caractérisée en ce que les pattes (83) des troisièmes poutres latérales (40, 41) sont reliées à la poutre centrale (14) par des barres de commande (81, 82) et le basculement simultané des poutres latérales (40, 41) se fait avec les poutres latérales (18, 19, 36, 37).
